Europäisches Patentamt

European Patent Office

Office européen des brevets

(11) Veröffentlichungsnummer : **0 180 629**
**B1**

(12) **EUROPÄISCHE PATENTSCHRIFT**

(45) Veröffentlichungstag der Patentschrift :
09.11.88

(21) Anmeldenummer : 85902452.3

(22) Anmeldetag : 10.05.85

(86) Internationale Anmeldenummer :
PCT/DE 85/00155

(87) Internationale Veröffentlichungsnummer :
WO/8505385 (05.12.85 Gazette 85/26)

(51) Int. Cl.⁴ : **D 06 F 58/28**, G 05 D 22/02

(54) VERFAHREN ZUR RESTFEUCHTESTEUERUNG EINES WÄSCHETROCKNERS.

(30) Priorität : 11.05.84 DE 3417482

(43) Veröffentlichungstag der Anmeldung :
14.05.86 Patentblatt 86/20

(45) Bekanntmachung des Hinweises auf die Patenterteilung : 09.11.88 Patentblatt 88/45

(84) Benannte Vertragsstaaten :
DE FR GB IT SE

(56) Entgegenhaltungen :
DE-A- 3 102 843
DE-A- 3 211 856
GB-A- 2 090 435
US-A- 3 660 909
US-A- 3 762 064

(73) Patentinhaber : Miele & Cie. GmbH & Co.
Carl-Miele-Strasse
D-4830 Gütersloh 1 (DE)

(72) Erfinder : MEIERFRANKENFELD, Wenzel
Plümersweg 156
D-4830 Gütersloh 1 (DE)

## Beschreibung

Die Erfindung bezieht sich auf ein Verfahren zur Steuerung des Restfeuchtegehaltes der Wäsche in einem programmgesteuerten Wäschetrockner unter Verwendung einer Feuchtigkeitsmeßschaltung, die den beladungsspezifischen Leitwert berücksichtigt, wobei « beladungsspezifischer Leitwert » den durch die Wasserart, Beladungsmengen. Wäscheart festgelegten Leitwert definiert. Ein derartiges Verfahren ist aus der DE-A-3 211 856 bekannt.

Aus dieser Schrift ist ein Wäschetrockner mit einer elektronischen Einrichtung zur Steuerung des Trocknungsprozeßes bekannt, bei der manuell oder automatisch eingebbare Steuersignale zur Kompensierung unterschiedlicher beladungsspezifischer Leitwerte des vorliegenden in der Wäsche gebundenen Wassers berücksichtigt werden. Die Messung des beladungsspezifischen Leitwertes wird hier je nach Trocknerart unterschiedlich vorgenommen. Bei einem Ablufttrockner wird im Blendenbereich ein separater Meßbehälter untergebracht, in den der Benutzer über eine von vorne zugängliche Einfüllöffnung manuell eine Wasserprobe einfüllen kann. In diesem Meßbehälter sind Elektroden untergebracht, die den beladungsspezifischen Leitwert der Wasserprobe messen und der elektronischen Steuereinrichtung zuführen. Bei einem Wäschetrockner mit Kondensationseinrichtung sind die Meßelektroden direkt im Auffangbehälter der Kondensationseinrichtung angeordnet.

Ein Nachteil der vorbekannten Ausführung besteht darin, daß eine aufwendige und teure Meßeinrichtung zur Erfassung des beladungsspezifischen Wasserleitwertes vorgesehen ist. Der Erfindung liegt deshalb die Aufgabe zugrunde, ein Verfahren zur Steuerung des Restfeuchtegehaltes der Wäsche in einem programmgesteuerten Wäschetrockner zu schaffen, bei dem für die beladungsspezifische Leitwerterfassung eine einfache und in der Steuerung preisgünstig unterzubringende Meßeinrichtung verwendbar ist, die darüber hinaus noch zusätzliche für die Steuerung des Trocknungsprozesses notwendige Informationen liefert.

Die Lösung dieser Aufgabe wird durch die im Hauptanspruch gekennzeichneten Merkmale erzielt. Weitere Merkmale und Ausgestaltungen der Erfindung ergeben sich aus den nachgestellten Unteransprüchen.

Der Vorteil des erfindungsgemäßen Verfahrens und der dazu verwendbaren Schaltungseinrichtung ist insbesondere darin zu sehen, daß der für die Steuerung des Restfeuchtegehaltes wesentliche beladungsspezifische Wasserleitwert auf einfache Art ermittelt und berücksichtigt wird, und daß daneben noch weitere Informationen hinsichtlich Beladungsmenge und Wäscheart mit der gleichen Messung gewonnen und in entsprechender Weise bei der Restfeuchtesteuerung berücksichtigt werden können. Hierdurch wird ein sehr genaues und unverfälschtes Trocknungsergebnis erzielt.

Ein Ausführungsbeispiel der Erfindung ist in den Zeichnungen schematisch dargestellt. Es zeigen :

Fig. 1 ein Spannungs/Zeitdiagramm der am Wäschewiderstand der Feuchtigkeitsmeßschaltung anliegenden Spannung und

Fig. 2 in einem Ausschnitt und in vereinfachter Weise die Schaltungsanordnung zur Erfassung der am Wäschewiderstand anliegenden Spannung.

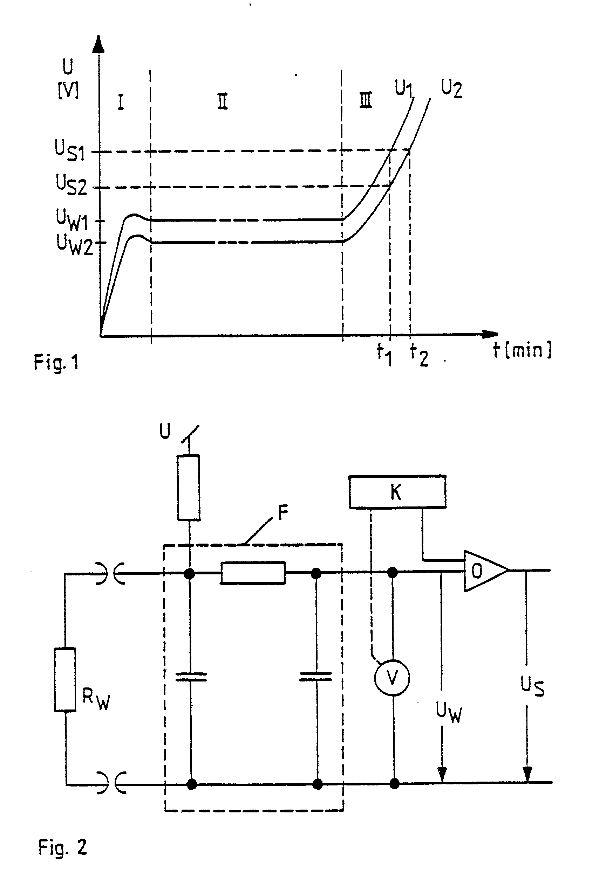

In der Figur 1 sind zwei mögliche Spannungsverläufe $U_1$ und $U_2$ dargestellt, wie sie in einem Wäschetrockner der üblichen Bauart vorkommen können. Hierbei sei angenommen, daß die Spannungskurve $U_1$ für einen Wäscheposten gilt, der gegenüber $U_2$ einen geringeren Leitwert des in der Wäsche gebundenen Wassers aufweist.

Der Spannungsverlauf kann hierbei in drei Phasen eingeteilt werden. In der Trocknungsphase I (ca. 3-4 Minuten) findet sozusagen das Einschwingen des Betriebszustandes statt, in der annähernd konstanten Trocknungsphase II verändert sich der Spannungswert am Wäschewiderstand nicht und bleibt annähernd konstant, während in der Trocknungsphase III die Abschaltschwelle erreicht wird.

Wird nun in der Programmsteuerung des Wäschetrockners z. B. das Programm « Bügelfeucht » angewählt, so wird in der Feuchtigkeitsmeßschaltung die Abschaltschwelle $U_{S1}$ gesetzt und nach Ablauf des Trocknungsvorgangs wird nach der Zeit $t_1$ die Beendigung des Trockenvorgangs eingeleitet. Wird nun der Trocknungsvorgang bei gleichen Voraussetzungen nur mit einem anderen Leitwert des in der Wäsche gebundenen Wassers vorgenommen, so würde ohne Korrekturmaßnahme die gleiche Spannungsschaltschwelle $U_{S1}$ erst nach der Zeit $t_2$ erreicht. Dies hat zur Folge, daß die Wäsche trockener entnommen wird, als wie es vom Benutzer vorgewählt und gewünscht wurde.

Hier greift nun die in der Figur 2 dargestellte Schaltungsanordnung ein, die für die Kompensation dieser Meßwertverfälschung sorgt. In der Feuchtigkeitsmeßschaltung wird nach der Filterstufe F die am Wäschewiderstand RW parallel liegende Spannung $U_W$ abgegriffen und einer Korrekturstufe K zugeführt. In dieser Korrekturstufe K wird der augenblickliche Spannungsmeßwert $U_W$ gespeichert und mit einer in einem weiteren Speicher abgelegten Referenzwerttabelle ausgewertet. Abhängig von diesem Vergleich wird einem Komparator O der Feuchtigkeitsmeßschaltung der korrigierte Referenzwert zugeführt. Dadurch wird die Absenkung der Abschaltspannung $U_S$ auf ein niedrigeres Niveau $U_{S2}$ bewirkt. Die Folge davon ist, daß der Trocknungsprozeß zum gleichen Zeitpunkt $t_1$ beendet wird, wodurch sich dann der tatsächlich gewünschte und angewählte Restfeuchtegehalt des Wäschepostens erzielen läßt.

Der gespeicherte Spannungsmeßwert $U_W$ läßt sich aber nicht nur als Indikator für den beladungsspezifischen Leitwert des Wassers heranziehen, genauso kann er als Meßgröße für unterschiedliche Beladungsmengen oder Wäschearten herangezogen werden. Deshalb können in der Korrekturstufe K die Referenzwerte auch in ihrer Abhängigkeit zur Beladungsmenge und zur Wäscheart abgestimmt werden. Bei den heute üblichen Mikroprozessorsteuerungen sind derartige Maßnahmen relativ einfach zu realisieren.

Damit ein Fehllauf des Trockners vermieden wird, sollte in der Korrekturstufe K eine Grenzwertschwelle für die Referenzspannung vorprogrammiert sein.

## Patentansprüche

1. Verfahren zur Steuerung des Restfeuchtegehaltes der Wäsche in einem programmgesteuerten Wäschetrockner unter Verwendung einer leitwertabhängigen Feuchtigkeitsmeßschaltung, die den beladungsspezifischen Leitwert berücksichtigt, dadurch gekennzeichnet, daß während der Trocknungsphase (II) mit annähernd konstantem trocknungsgradabhängigem Leitwert in der Feuchtigkeitsmeßschaltung die augenblicklich am Wäschewiderstand ($R_W$) anliegende Spannung ($U_W$) als Indikator für den vorliegenden beladungsspezifischen Leitwert des in der Wäsche gebundenen Wassers und/oder als Indikator für die jeweilige Beladungsmenge und/oder Wäscheart abgegriffen wird und diese Spannung ($U_W$) einer Korrekturstufe (K) zugeführt wird, wobei in der Korrekturstufe (K) der Vergleich des Augenblickswertes ($U_{W1}$, $U_{W2}$) mit empirisch ermittelten und in einem Speicher der Korrekturstufe abgelegten Referenzwerten stattfindet, und daß in Abhängigkeit dieses Vergleichs die jeweils den vorgewählten Restfeuchtegehalt angepaßte Abschaltspannung ($U_S$) zur Beendigung des Trocknungsprogramms eingestellt wird.

2. Verfahren nach Anspruch 1, dadurch gekennzeichnet, daß die Ausgangspannung der Korrekturstufe (K) auf eine vorgegebene Spannungsschwelle begrenzt wird.

3. Verfahren nach Anspruch 1 und 2, dadurch gekennzeichnet, daß die Erfassung des Spannungsmeßwertes erst nach Ablauf der Anfangsphase (I) des Trocknungsprozesses wirksam geschaltet wird.

## Claims

1. Method for regulating the residual dampness of linen in a programme-controlled drying machine, utilising a conductance-dependent dampness measuring circuit which takes account of the load-specific conductance, characterised in that, during the drying phase (II), with a virtually constant conductance in the dampness measuring circuit, which conductance is dependent on the degree of drying, the voltage ($U_W$) which is instantaneously applied to the washing resistor ($R_W$) is taken as an indication of the existing, load-specific conductance of the water contained in the linen and/or as an indication of the particular load quantity and/or type of linen, and this voltage ($U_W$) is fed to a correcting stage (K), whereby the comparison between the instantaneous value ($U_{W1}$, $U_{W2}$) and empirically determined reference values stored in a storage unit of the connecting stage takes place in the correcting stage (K), and in that the disconnection voltage ($U_S$), which corresponds to the particular preselected residual dampness, is determined on the basis of this comparison, in order to terminate the drying programme.

2. Method according to claim 1, characterised in that the output voltage of the correcting stage (K) is limited to a prescribed voltage threshold.

3. Method according to claims 1 and 2, characterised in that the determination of the measured voltage value is effectively commenced only after the initial phase (1) of the drying process has been terminated.

## Revendications

1. Procédé pour la commande de la teneur en humidité résiduelle du linge dans un séchoir à linge commandé par un programme avec utilisation d'un circuit de mesure de l'humidité dépendant de la conductibilité qui prend en compte la conductibilité propre à la charge, caractérisé par le fait qu'au cours de la phase de séchage (II) où la conductibilité dépendant de la charge est approximativement constante, la tension instantanée ($U_W$) appliquée à la résistance du linge ($R_W$) est saisie dans le circuit de mesure de l'humidité comme indicateur pour la conductibilité de l'eau fixée au linge, valeur qui est propre à la charge présente, et/ou comme indicateur pour chaque quantité de charge et/ou pour chaque type de linge, et cette tension ($U_W$) est amenée à un étage correcteur (K), la comparaison de la valeur instantanée ($U_{W1}$, $U_{W2}$) avec des valeurs de référence obtenues empiriquement et enregistrées dans une mémoire de l'étage correcteur (K) ayant lieu dans l'étage correcteur (K), et par le fait qu'en fonction de cette comparaison, la tension de coupure du circuit est adaptée à chaque fois à la teneur en humidité résiduelle choisie au préalable et réglée pour terminer le programme de séchage.

2. Procédé selon la revendication 1, caractérisé par le fait que la tension de départ de l'étage correcteur (K) est limitée à un seuil de tension fourni au préalable.

3. Procédé selon la revendication 1 ou 2, caractérisé par le fait que la saisie de la valeur de mesure de la tension n'est rendue active qu'après le déroulement de la phase de début (I) du processus de séchage.

3

Fig. 1

Fig. 2

1